# EUROPEAN PATENT SPECIFICATION

(11) **EP 2 584 734 B1**
(45) Date of publication and mention of the grant of the patent: **03.05.2017**
(21) Application number: 10853539.4
(22) Date of filing: 15.12.2010
(51) Int. Cl.: H04L 12/24, H04L 12/26

(54) **METHOD FOR DETECTING MISMATCH FAULT AND MAINTENANCE ENDPOINT**
VERFAHREN ZUR ERKENNUNG VON FEHLZUORDNUNGEN UND WARTUNGSENDPUNKTEN
PROCÉDÉ DE DÉTECTION DE DÉFAUT D'ADAPTATION ET POINT D'EXTRÉMITÉ DE MAINTENANCE

(30) Priority: 21.06.2010 CN 201010205896
(43) Date of publication of application: 24.04.2013
(73) Proprietor: ZTE Corporation, Shenzhen, Guangdong 518057 (CN)
(72) Inventor: AO, Ting, Shenzhen Guangdong 518057 (CN); WEI, Yuehua, Shenzhen Guangdong 518057 (CN); WU, Shaoyong, Shenzhen Guangdong 518057 (CN)
(74) Representative: Bittner, Bernhard
(86) International application number: PCT/CN2010/079829
(87) International publication number: WO 2011/160400

(56) References cited:
- EP-A1- 2 110 987
- CN-A- 1 855 851
- CN-A- 101 449 562
- US-A1- 2009 262 790
- "IEEE P802.1Qbf/D0.4 Draft Standard for Local and Metropolitan Area Networksâ Virtual Bridged Local Area Networksâ Amendment: PBB-TE Infrastructure Segment Protection ; 802-1bf-d0-4", IEEE DRAFT; 802-1BF-D0-4, IEEE-SA, PISCATAWAY, NJ USA, vol. 802.1, no. d0-4, 28 August 2010 (2010-08-28), pages 1-97, XP017638551, [retrieved on 2010-08-28]
- "IEEE Standard for Local and metropolitan area networks-Virtual Bridged Local Area Networks Amendment 10: Provider Backbone Bridge Traffic Engineering;IEEE Std 802.1Qay-2009 (Amendment to IEEE Std 802.1Q-2005)", IEEE STANDARD, IEEE, PISCATAWAY, NJ, USA, 5 August 2009 (2009-08-05), pages c1-131, XP017604217, ISBN: 978-0-7381-5992-8
- "IEEE P802.1Qbf/D0.2 Draft Standard for Local and Metropolitan Area Networksâ Virtual Bridged Local Area Networksâ Amendment: PBB-TE Infrastructure Segment Protection ; 802-1bf-d0-2", IEEE DRAFT; 802-1BF-D0-2, IEEE-SA, PISCATAWAY, NJ USA, vol. 802.1, no. d0-2, 9 March 2010 (2010-03-09), pages 1-60, XP017638544, [retrieved on 2010-03-09]
- "802-1bf-d0-3-dis-v1 ; 802-1bf-d0-3-dis-v1", IEEE DRAFT; 802-1BF-D0-3-DIS-V1, IEEE-SA, PISCATAWAY, NJ USA, vol. 802.1, no. d0-3-dis-v1, 15 July 2010 (2010-07-15), pages 1-17, XP017638550, [retrieved on 2010-07-15]
- "IEEE Standard for Local and Metropolitan Area Networks Virtual Bridged Local Area Networks;IEEE Std 802.1Q-2005 (Incorporates IEEE Std 802.1Q1998, IEEE Std 802.1u-2001, IEEE Std 802.1v-2001, and IEEE Std 802.1s-2002)", IEEE STANDARD, IEEE, PISCATAWAY, NJ, USA, 1 January 2006 (2006-01-01), pages _1-285, XP017603885, ISBN: 978-0-7381-4876-2

## Description

### TECHNICAL FIELD

The disclosure relates to the Ethernet protection technology, and particularly to a method for detecting a mismatch fault and a Maintenance Endpoint (MEP) in the segment protection technology of Provider Backbone Bridging-Traffic Engineering (PBB-TE).

### BACKGROUND

With the introduction of carrier Ethernet concept, for making the Ethernet meet the telecommunication grade standard, higher demand of protection and switching of the Ethernet is proposed. In the existing protection switching technology of PBB-TE, protection to a Traffic Engineering Service Instance (TESI), namely an end-to-end tunnel protection, is supported currently. The end-to-end tunnel protection solution not only takes longer protection switching time, but also involves too many nodes, which cannot realize protection to its intermediate link and node. Once a certain intermediate link or node is failed, it is necessary to witch the whole TESI; besides, if there are multiple TESIs on the failed link or failed node, switching of multiple TESIs is caused. That is to say, the protected object of the end-to-end protection solution in the PBB-TE is the TESI; when it is detected that a certain working TESI is failed, it is needed to use another protection TESI to encapsulate user message entering the PBB-TE tunnel again, so that the traffic is forwarded through the protection PBB-TE tunnel.

For the Ethernet, protection to link and node is one part of the Ethernet protection; most network faults occur on a certain link or node, so the segment protection of PBB-TE becomes more urgent; many operators have made requirements for the segment protection of PBB-TE, that is, specially configuring a protection segment on a working segment of the PBB-TE tunnel to protect the working segment, wherein the working segment and the protection segment compose an Infrastructure Protection Group (IPG).

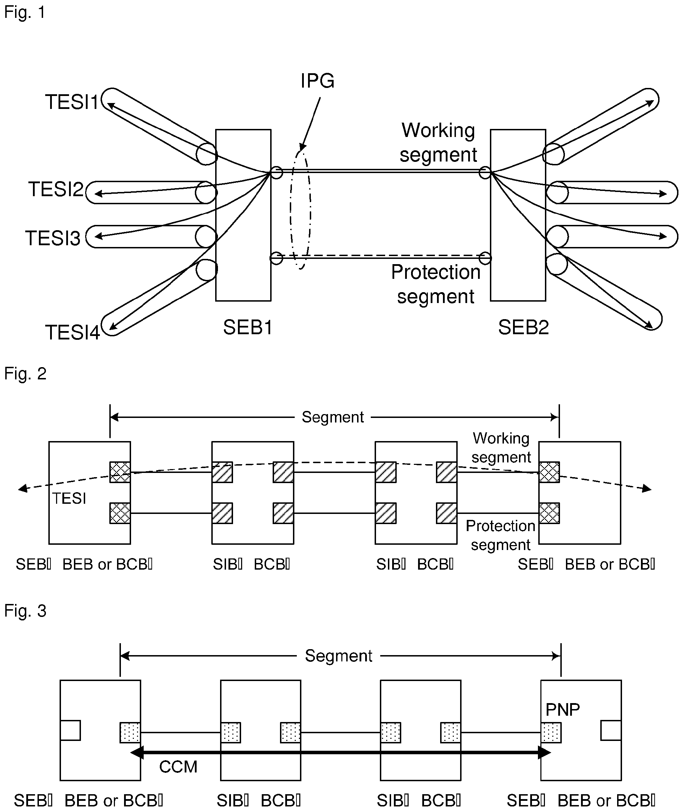

Fig. 1 shows a schematic diagram of the current segment protection of PBB-TE; as shown in Fig. 1, an IPG includes one working segment and one or more protection segments. When there is no fault detected on the working segment, all traffics protected by the IPG of PBB-TE are forwarded from the working segment normally; once there is fault occurring on the working segment or related management instruction is received, and a Segment Edge Bridge (SEB) of the IPG of PBB-TE can timely detect the fault, the SEB will switch traffic, namely triggering a Forwarding Database (FDB) to update, and modifying an egress port of the FDB to which the TESI protected by the IPG corresponds into an egress port to which the protection segment corresponds on the SEB (i.e. a TESI mapping process), thereby switching traffic to the protection segment, realizing protection to the working segment, ensuring normal forwarding of the network traffic and improving the reliability of network.

Fig. 2 shows a schematic diagram of a current working segment and protection segment of PBB-TE; in Fig. 2, a grid with grid shades represents a Segment Endpoint Port (SEP), and a grid with oblique lines shade represents a Segment Intermediate Port (SIP). In the existing segment protection of PBB-TE, a member segment means the working segment or the protection segment of an IPG. The working segment means the one by which the traffic passes in normal operation; as shown in Fig. 2, the protection segment means the one which includes the traffic after switching because of detecting a fault on the working segment or receiving a management instruction of switching; as shown in Fig. 2, the segment means a series of LAN and MAC relay composition between a PNP port and a PNP port; as shown in Fig. 2, the SEB is used for ending two ends of segment, and it may be either a BEB device or a BCB device in the PBB-TE network; as shown in Fig. 2, a bridge device in middle of segment is the SIB, and the SIB may be the BCB device; as shown in Fig. 2, the IPG traffic switching means redirecting a group of TESI protected by the IPG from the working segment to the protection segment, or from the protection segment to the working segment, wherein the redirection is usually implemented by modifying the egress port of corresponding item to which the TESI corresponds in the FDB.

Fig. 3 shows a schematic diagram of the current segment connectivity detection of PBB-TE; in Fig. 3, a grid with snowflake shadows represents the PNP port, a blank grid represents the PNP or CBP port. As shown in Fig. 3, the connectivity detection of middle segment of PBB-TE includes: configuring a TESI, which is a channel for forwarding a Connectivity Check Message (CCM), on the segment. A point-to-point Maintenance Association (MA) is initiated on the TESI, and two endpoints SEP of the segment are down MEP of the MA. The connectivity of the segment is detected by sending the CCM to each other.

Sometimes, when some devices are failed or configured wrongly, the problem of mismatch may occur when the SEBs at two ends map the TESI to the right segment. For maintaining the normal operation of network, it is needed to recognize the problem of mismatch and report the mismatch. There are usually two kinds of mismatch: one is caused by incomplete switching of segment protection, and the other is caused by working/protection configuration fault.

For the mismatch caused by incomplete switching of segment protection, for example, fault of device, although the local device detects the fault, it has failed to realize switching, and the local device sends the CCM including a Remote Defect Indication (RDI) field to the remote SEB, so the remote device maps the TESI to the protection segment, and the local device still transmits traffic on the working segment. Similarly, the mismatch will occur in the event that the local device has mapped the TESI to the protection segment, but the remote device has failed to map the TESI to the protection segment when receiving the CCM including the RDI field which is set as well.

The working/protection configuration fault will occur in the event of mismatch. For example, one end is configured as transmitting the traffic on the working segment, and the other end is configured as transmitting the traffic on the protection segment. Or, when one end is configured as reversing mode and the other end is configured as non-reversing mode, when the fault disappears, the problem of mismatch will occur as well.

For preventing data loss and service interruption caused by the occurrence of mismatch, it is necessary to be able to detect mismatch fault and report the fault. At present, there is no solution for implementing detection for mismatch fault.

IEEE Standard for Local and metropolitan area networks-Virtual Bridged Local Area Networks Amendment 10: Provider Backbone Bridge Traffic Engineering; IEEE Std 802.1 Qay-2009(Amendment to IEEE Std 802.1Q-2005)", IEEE STANDARD, IEEE, PISCATAWAY, NJ, USA, 5 August 2009(2009-08-05), pages c1-131 discloses a method for detecting a mismatch fault of a Traffic Engineering Service Instance, TESI, in Provider Backbone Bridging-Traffic Engineering, PBB-TE.

IEEE P802.1Qbf/D0.2 Draft Standard for Local and Metropolitan Area Networks Virtual Bridged Local Area Networks Amendment: PBB-TE Infrastructure Segment protection; 802-1bf-d0-2 IEEE DRAFT; 802-1BF-D0-2, IEEE-SA. PISCATAWAY, NJ USA, vol.802.1, no.d0-2 March 2010(2010-03-09), pages 1-60, discloses how to realize a protection for PBB-TE Infrastructure Segment.

EP 2110987A1 (TELEFONAKTIEBOLAGET ERICSSON L M) 21 October 2009 (2009-10-31) discloses a method in a MEP, for controlling traffic between a first network element and a second network element connected by a working TESI, and a protection TESI.

### SUMMARY

In view of the above, the disclosure mainly aims to provide a method for detecting a mismatch fault and an MEP, which can find timely the mismatch problem occurred in the segment protection of PBB-TE, thereby preventing data loss and service interruption caused by the occurrence of mismatch.

For achieving above aim, two alternative methods for detecting a mismatch fault in PBB-TE infrastructure segment protection and corresponding systems are provided. The invention is defined by the appended claims. It can be seen from the technical solutions provided by the disclosure that the MEP determines that there is a TESI mapped in a segment to which itself corresponds, sets a PTS variable, and includes the set value of a PTS field in the CCM sent from the MEP itself; the MEP receives the CCM, obtains that the value of the PTS field (traffic) included in the CCM does not coincide with that of the PTS variable set by itself through comparison, and detects that a mismatch fault occurs. When detecting that a fault occurs in the segment where the MEP itself is, the MEP sends the CCM including an RDI flag, and sets the value of an RDI variable presentRDI of the current MEP as true, for showing that the CCM sent from the MEP includes the RDI currently, and indicating the remote MEP that a fault is detected at this end; when both the value of its current presentRDI and the value of the PTS variable set by itself are true, the MEP detects that a mismatch fault occurs. The method of the disclosure finds timely the mismatch problem occurred in the segment protection of PBB-TE, thereby preventing data loss and service interruption caused by the occurrence of mismatch.

### BRIEF DESCRIPTION OF THE DRAWINGS

Fig. 1 shows a schematic diagram of the current segment protection of PBB-TE;
Fig. 2 shows a schematic diagram of a current working segment and protection segment of PBB-TE;
Fig. 3 shows a schematic diagram of the current segment connectivity detection of PBB-TE;
Fig. 4 shows a flowchart of a method for detecting a mismatch fault according to the disclosure;
Fig. 5 shows a schematic diagram of an embodiment of PBB-TE segment composition according to the disclosure;
Fig. 6 shows a flowchart of a first embodiment of detecting a mismatch fault according to the disclosure;
Fig. 7 shows a flowchart of a second embodiment of detecting a mismatch fault according to the disclosure;
Fig. 8 shows a schematic diagram of an embodiment that a fault occurs in the PBB-TE segment in Fig. 5 according to the disclosure;
Fig. 9 shows a flowchart of a third embodiment of detecting a mismatch fault according to the disclosure; and
Fig. 10 shows a flowchart of a fourth embodiment of detecting a mismatch fault according to the disclosure.

### DETAILED DESCRIPTION

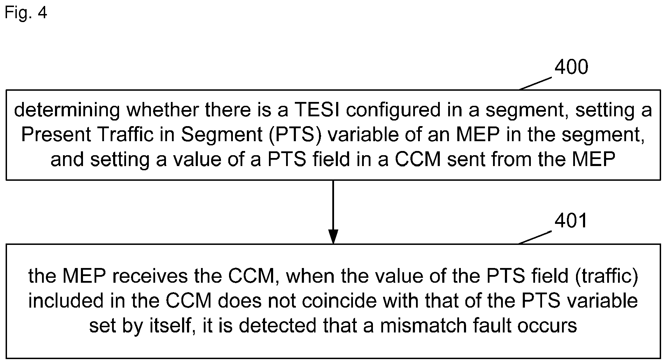

Fig. 4 shows a flowchart of a method for detecting a mismatch fault according to the disclosure; as shown in Fig. 4, the method includes the following steps.

Step 400: determining whether there is a TESI configured in a segment, setting a PTS variable of an MEP in the segment, and setting a value of a PTS field in a CCM sent from the MEP.

In the step, when it is determined that there is a TESI configured in the segment to which the MEP itself corresponds, setting the PTS as true or 1. Determining that there is a TESI configured in the segment to which the MEP itself corresponds is that: an IPG finds out egress port values of the TESI protected by it in a FDB. The PTS variable of the MEP to which the egress port corresponds in the IPG is set as true or 1; otherwise, it is set as false or 0. At this point,
the value of the PTS field (traffic) in the CCM sent from the MEP is set as the value of the PTS variable of the MEP, that is, the MEP indicates the value of the PTS variable which is already set by it through the traffic field.

The TESI is a TESI traffic or a TESI tunnel protected by the IPG where the MEP is.

Step 401: the MEP receives the CCM, when the value of the PTS field (traffic) included in the CCM does not coincide with that of the PTS variable set by itself, it is detected that a mismatch fault occurs.

For improving the detecting accuracy of the disclosure, furthermore, in the step, after obtaining the inconsistency through comparison, setting a first mismatch fault indication variable (mmCCMreceived) to be set, namely setting it as true or 1. If the first mismatch fault indication variable (mmCCMreceived) remains set after a first preset time period expires, it is considered that the occurrence of mismatch fault is detected, and it is needed to inform the fault.

The method further includes that: when the MEP receives the CCM and obtains that the value of the PTS field included in the CCM coincides with that of the PTS variable set by itself through comparison, operation is normal, and no mismatch fault occurs.

The method further includes that: when detecting that a fault occurs in the segment where the MEP itself is, the MEP sends a CCM including an RDI flag, and sets the value of an RDI variable (presentRDI) of the MEP as true, which means that a fault of the segment which the MEP is in is detected currently, for showing that the CCM sent from the MEP includes a set RDI currently, and indicating the remote MEP that a fault is detected at this end by the local MEP. The variable presentRDI is used for showing whether a fault occurs in the segment where the MEP is currently; if the MEP obtains that both the value of the variable presentRDI and the value of the PTS variable set by itself are true, it is detected that a mismatch fault occurs; otherwise, it is detected that operation is normal, and no mismatch fault occurs. Furthermore, for improving the detecting accuracy of the disclosure, when both the value of the variable presentRDI and the value of the PTS variable set by itself are true in the step, the following step is further included: setting a second mismatch fault indication variable (presentmmloc) to be set; if the second mismatch fault indication variable (presentmmloc) remains set after a second preset time period expires, it is considered that the occurrence of mismatch fault is detected.

Aiming at the method of the disclosure, an MEP is further provided. The MEP is configured to, when determining that there is a TESI configured in a segment, set a PTS variable of the MEP in the segment, and to include the value of a PTS field in a CCM sent from the MEP itself; when receiving the CCM, if the MEP obtains that the value of the PTS field included in the CCM does not coincide with that of the PTS variable set by itself through comparison, it is further configured to detect that a mismatch fault occurs. Furthermore, for improving the detecting accuracy of the disclosure, after obtaining the inconsistency through comparison, the MEP is further configured to set a first mismatch fault indication variable (mmCCMreceived) to be set, namely set it as true or 1. If the first mismatch fault indication variable (mmCCMreceived) remains set after a first preset time period expires, it is considered that the occurrence of mismatch fault is detected.

The MEP is further configured to, when receiving the CCM and obtaining that the value of the PTS field included in the CCM coincides with that of the PTS variable set by itself through comparison, detect that operation is normal, and no mismatch fault occurs.

When determining that there is a TESI configured in a segment, setting the value of PTS of the MEP in the segment as true or 1, and using the traffic field in the CCM sent from the MEP to include the set value of PTS;
determining that there is a TESI configured in the segment to which the MEP itself corresponds and setting the PTS of the MEP in the segment is that: an IPG finds out egress port values of the TESI protected by it in a FDB; setting the PTS variable of the MEP to which the egress port corresponds in the IPG as true or 1.

The MEP is further configured to, when detecting that a fault occurs in the segment where the MEP itself is, send a CCM including an RDI flag, and set the value of a variable presentRDI of the current MEP as true, which means that a fault of working segment is detected currently;
the MEP is further configured to receive the CCM including the RDI flag, obtain that both the value of its variable presentRDI and the value of the PTS variable set by itself are true through comparison, and detect that a mismatch fault occurs; otherwise, it is configured to detect that operation is normal, and no mismatch fault occurs.

For improving the detecting accuracy of the disclosure, when both the value of the variable presentRDI of the MEP and the value of the PTS variable set by the MEP are true, the MEP is further configured to set a second mismatch fault indication variable (presentmmloc) to be set; if the second mismatch fault indication variable (presentmmloc) remains set after a second preset time period expires, it is considered that the occurrence of mismatch fault is detected.

The method of the disclosure is described below with reference to embodiments in detail.

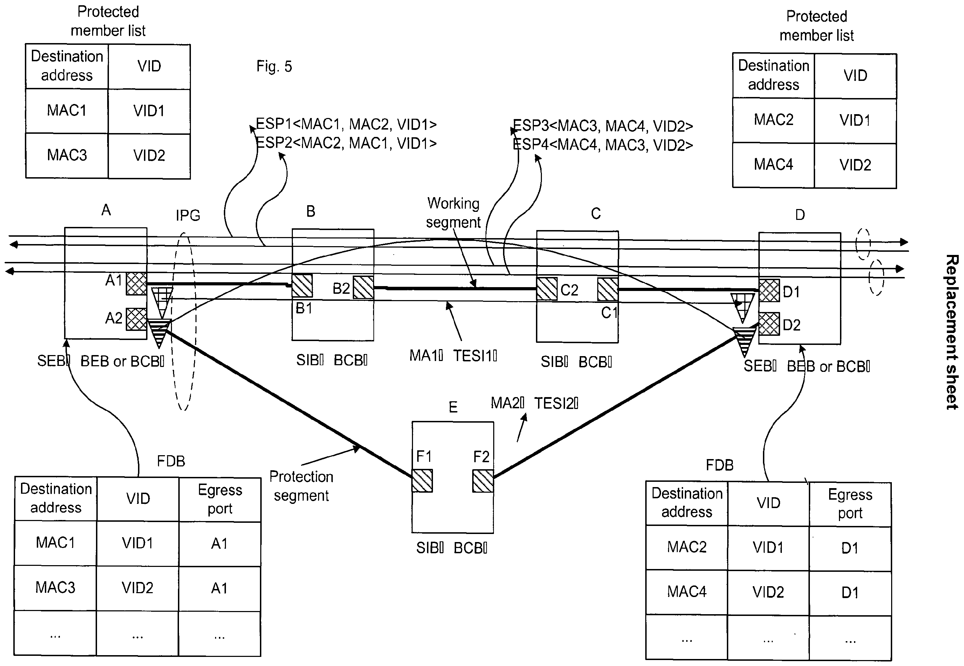

Fig. 5 shows a schematic diagram of an embodiment of PBB-TE segment composition according to the disclosure; as shown in Fig. 5, A-B-C-D is a part of PBB-TE tunnel; supposing that there are two groups of TESI passing this common path, the TESI is composed of two Ethernet Switching Paths (ESPs) in opposite directions, and each ESP is determined by a 3-tuple <ESP-DA, ESP-SA, ESP-VID>, wherein ESP-DA represents destination MAC address of the ESP, ESP-SA represents source MAC address of the ESP, and ESP-VID represents a Virtual Local Area Network Identification (VLAN ID).

The two groups of TESI are respectively expressed as: the 3-tuple to which the TESI1 corresponds is ESP1<MAC1, MAC2, VID1> and ESP2<MAC2, MAC1, VID1>; the 3-tuple to which the TESI2 corresponds is ESP3<MAC3, MAC4, VID2> and ESP4<MAC4, MAC3, VID2>.

Supposing that A-E-D is used to protect the path A-B-C-D, then A-B-C-D and A-E-D compose the IPG of the PBB-TE, wherein A-B-C-D is a working segment of the IPG, and A-E-D is a protection segment of the IPG. The protected members of the IPG include the TESI1 and the TESI2. In the normal state, a forwarding path of the TESI1 and TESI2 is A-B-C-D. These TESIs protected by the IPG are respectively configured with a protected member list at endpoint of the IPG, as shown in Fig. 5.

A transmission channel for the CCM is configured in A-B-C-D, and the transmission channel is composed of two 3-tuples, which are respectively <MAC_{D1}, MAC_{A1}, VID3> and <MAC_{A1}, MAC_{D1}, VID3>; a maintenance united area MA1 of the segment is configured; another transmission channel for the CCM is configured in A-E-D, and the transmission channel is also composed of two 3-tuples, which are respectively <MAC_{D2},MAC_{A2},VID4> and <MAC_{A2},MAC_{D2},VID3>; a maintenance united area MA2 of the segment is configured.

In embodiments of the disclosure, supposing that Port A1 on node A and Port D1 on node D are two MEPs of the MA1; and supposing that A2 port on node A and D2 port on node D are two MEPs of the MA2. Each MEP is set with a variable PTS.

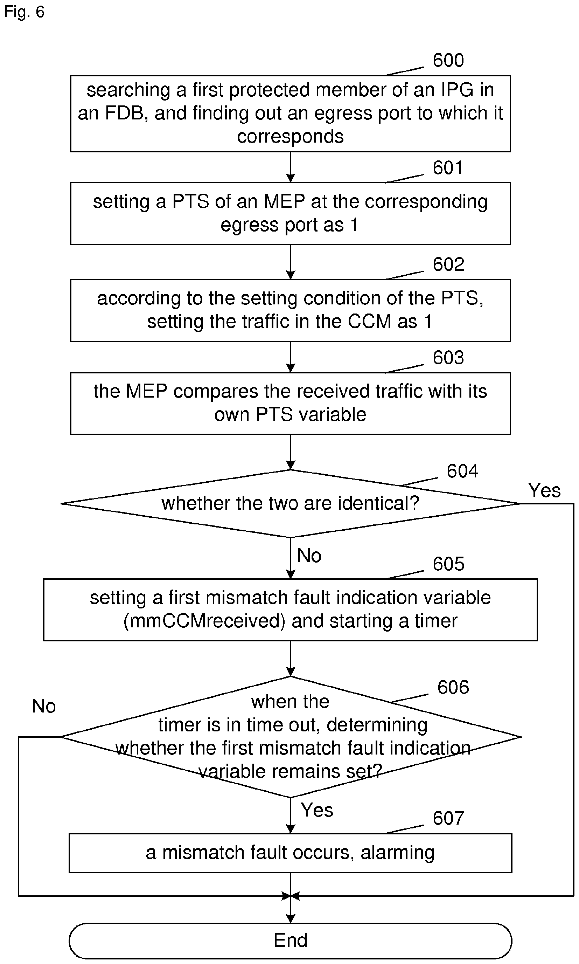

Fig. 6 shows a flowchart of a first embodiment of detecting a mismatch fault according to the disclosure; with reference to Fig. 5, in the first embodiment, supposing that determination of a PTS flag is performed only according to one of the protected members of an IPG, that is, the PTS flag of the MEP in a segment is set if it is detected that there is a member working in the segment, and supposing that an initial value of the PTS flag is 0. As shown in Fig. 6, the embodiment includes the following steps.

Step 600: searching a certain protected member list of an IPG, finding out an item to which either a first protected member or one of the protected members in the list corresponds in an FDB, and finding out an egress port to which it corresponds according to the item.

For a device A, its FDB is shown in Fig. 5, the egress port of the item to which the first protected member<MAC1, VID1> in a certain protected member list of the IPG corresponds in the FDB on the device A is port A1.

The specific implementation of the step belongs to the conventional technology of the skilled personnel in the field, so it will not be described here in detail.

Step 601: according to the found egress port, setting a PTS of an MEP to which the egress port corresponds in the IPG. Thus, corresponding to the port A1 on the device A, the PTS variable of the MEP at the port A1 is equal to 1, which means that the traffic is transmitted through the port A1 currently; similarly, the PTS variable of the MEP at the port D1 is equal to 1.

Step 602: according to the setting condition of the PTS, a traffic field in the CCM sent from the MEP is correspondingly set.

In the first embodiment, because the PTS variable of the MEP at the port A1 on the device A is equal to 1, the traffic field in the CCM sent from the MEP at the port A1 is equal to 1. The traffic field is at the second MSB in the flag field of the CCM. Similarly, the traffic field of the CCM sent from the device D is equal to 1.

Step 603: the MEP compares the traffic field in the received CCM with its own PTS variable.

Step 604: if the two are identical, it is considered that operation is normal, and ending the flow; otherwise, entering step 605.

Step 605: setting a first mismatch fault indication variable (mmCCMreceived), namely, setting it as true or 1; at the same time, starting a timer expiring in a first time period.

Step 606: when the timer is in time out, determining whether the first mismatch fault indication variable (mmCCMreceived) remains set after the first time period expires, if so, entering step 607; otherwise, it is considered that operation is normal, and ending the flow.

Step 607: it is considered that a mismatch fault occurs, alarm information is generated to report the fault. please be noted that, the specific implementation of generating alarm information to report the fault can be realized by using the existing method; it belongs to the conventional technology of the skilled personnel in the field and not intended to limit the scope of the claims of the disclosure.

Similarly, after receiving the CCM including the traffic field which is equal to 1 from the port A1, the MEP at the port D1 also compares the traffic field with its own PTS variable; if the two are identical, it is considered that traffic operates normally; if the two are different, then the device D considers that a mismatch fault occurs in the IPG, and generates alarm information to report the fault.

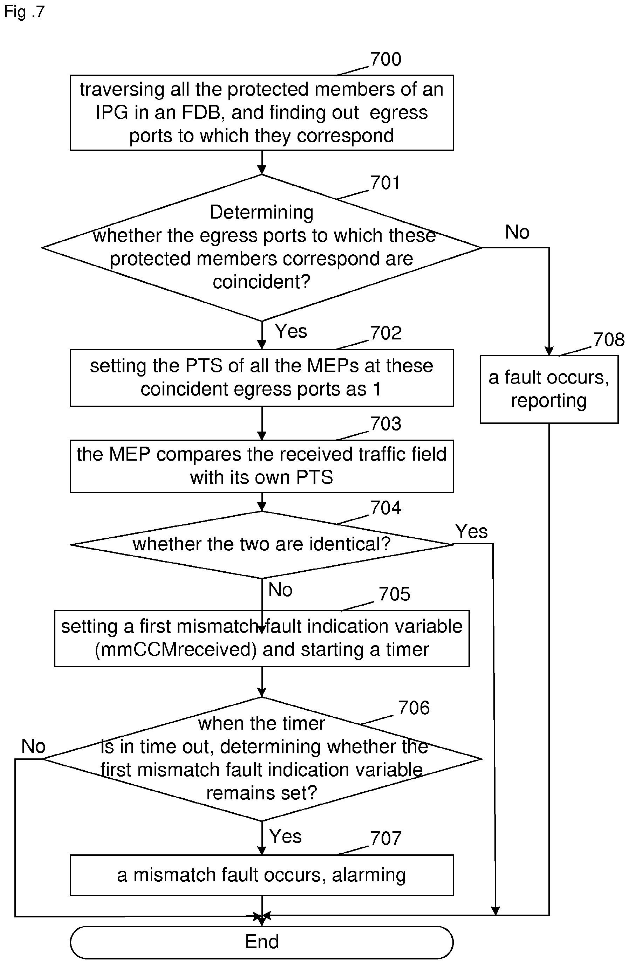

Fig. 7 shows a flowchart of a second embodiment of detecting a mismatch fault according to the disclosure; with reference to Fig. 5, in the second embodiment, supposing that determination of a PTS flag is performed according to all the protected members of an IPG, that is, it is needed to determine all the protected members; if all the protected members work in a segment, the PTS flag of the MEP in the segment is set, and supposing that an initial value of the PTS flag is 0. As shown in Fig. 7, the embodiment includes the following steps.

Step 700: searching a certain protected member list of an IPG, traversing all the protected members in the list, searching items to which these protected members correspond in an FDB, and finding out egress ports to which they correspond according to the items.

For the device A, its FDB is shown in Fig. 5; there are two protected members <MAC1, VID1> and <MAC3, VID2> in a certain protected member list of the IPG; it is obtained that both the egress ports of the two protected members are the port A1 by searching corresponding items in the FDB on the device A.

The specific implementation of the step belongs to the conventional technology of the skilled personnel in the field, so it will not be described here in detail.

Step 701: determining whether the egress ports to which these protected members correspond are coincident; if so, entering step 702; otherwise, entering step 708.

Step 702: setting the PTS of all the MEPs at these coincident egress ports.

In the second embodiment, because both the egress ports of two protected members are the port A1, which means that they are coincident, respectively setting the PTS variable of the MEPs at the ports as 1, which means that the traffic is transmitted through the port A1 currently; similarly, the PTS variable of the MEP at the port D1 is equal to 1.

According to the setting condition of the PTS, the traffic field in the CCM sent from the MEP is correspondingly set. In the second embodiment, because the PTS variable of the MEP at the port A1 on the device A is equal to 1, the traffic field in the CCM sent from the MEP at the port A1 is equal to 1. The traffic field is at the second MSB in the flag field of the CCM. Similarly, the traffic field of the CCM sent from the device D is equal to 1.

Step 703 to step 704: the MEP compares the traffic bit in the received CCM with its own PTS variable; if the two are identical, it is considered that operation is normal, and ending the flow; otherwise, entering step 705.

Step 705: setting a first mismatch fault indication variable (mmCCMreceived), namely, setting it as true or 1; at the same time, starting a timer expiring in a first time period.

Step 706: when the timer is in time out, determining whether the first mismatch fault indication variable (mmCCMreceived) remains set after the first time period expires, if so, entering step 707; otherwise, it is considered that operation is normal, and ending the flow.

Step 707: it is considered that a mismatch fault occurs, alarm information is generated to report the fault, and the flow is ended.

Step 708: reporting related information, and exiting the flow of determining mismatch.

Similarly, after receiving the CCM including the traffic which is equal to 1 from the port A1, the MEP at the port D1 compares the traffic bit with its own PTS variable; if the two are identical, it is considered that traffic operates normally; if the two are different, then the device D considers that a mismatch fault occurs in the IPG, and generates alarm information to report the fault.

The first embodiment and the second embodiment are mainly used for detecting a mismatch fault caused by working/protection configuration fault and other situations.

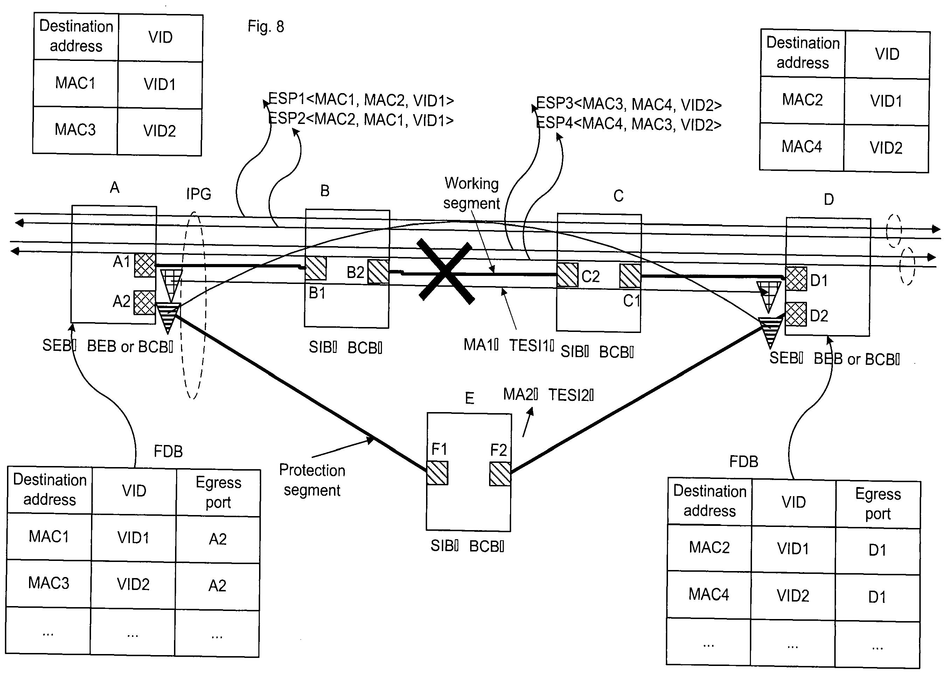

The specific implementation of detecting a mismatch fault caused by incomplete switching is described below with reference to a third embodiment and a fourth embodiment in detail. Supposing that a fault occurs in the PBB-TE segment shown in Fig. 5 for some reason, for example, part B-C, the IPG switches on the device A, but the device D does not switch; Fig. 8 shows a schematic diagram of an embodiment that a fault occurs in the PBB-TE segment in Fig. 5 according to the disclosure; as shown in Fig. 8, at this point, the egress port of the item to which the protected member of an IPG corresponds in an FDB on the device A is changed from A1 to A2, and the egress port of the item, in the FDB, to which the protected member of the IPG corresponds on the device A is still A2; however, because the device D does not switch successfully, the egress port of the item to which the protected member of the IPG corresponds in the FDB on the device D is still D1.

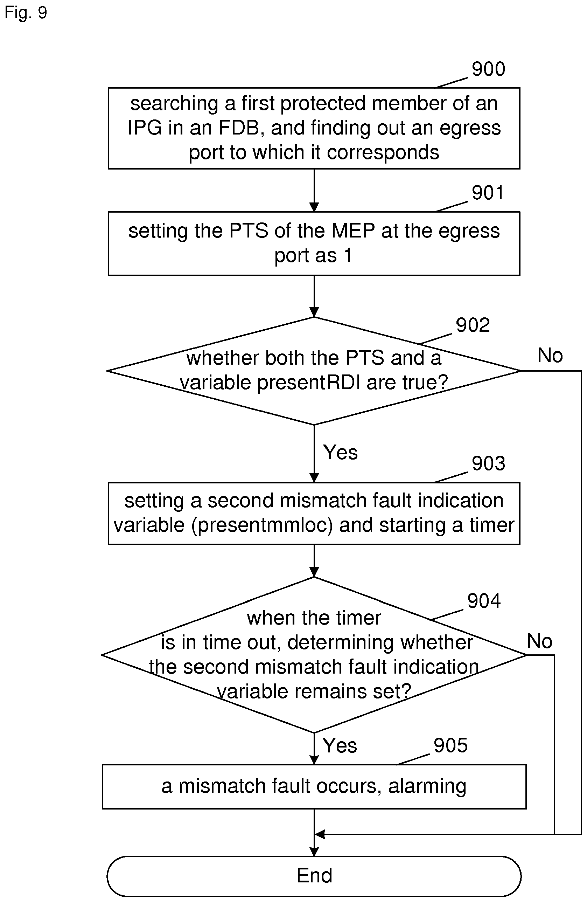

Fig. 9 shows a flowchart of a third embodiment of detecting a mismatch fault according to the disclosure; with reference to Fig. 8, in the third embodiment, supposing that determination of a PTS flag is performed only according to one of the protected members of the IPG, that is, the PTS flag of the MEP in a segment is set if it is detected that there is a member working in the segment, and supposing that an initial value of the PTS flag is 0. As shown in Fig. 9, the embodiment includes the following steps.

Step 900: searching a certain protected member list of an IPG, finding out an item to which either a first protected member or one of the protected members in the list corresponds in an FDB, and finding out an egress port to which it corresponds according to the item.

For the device A, its FDB is shown in Fig. 8, the egress port of the item to which the first protected member<MAC1, VID1> in a certain protected member list of the IPG corresponds in the FDB on the device A is port A2.

Step 901: according to the found egress port, setting the PTS of the MEP where the egress port is.

In the third embodiment, corresponding to the port A2 on the device A, the PTS variable of the MEP at the port A2 is set equal to 1, which means that the traffic is transmitted through the port A2 currently; for the device D, similarly, the PTS variable of the MEP at the port D1 is equal to 1, which means that the traffic is transmitted through the port D1 currently.

Step 902: comparing the value of the PTS variable with the value of a variable presentRDI of the MEP. If both of them are in a set state, or both of them are true, entering step 903; otherwise, operation is normal, and ending the flow;
if the MEP detects that there is fault, it sends the CCM including the set RDI flag, and sets the variable presentRDI of the MEP. Because the MEP sends the CCM with the set RDI flag, it is considered that the opposite end has switched.

In the third embodiment, because a fault occurs in the B-C segment, the device D as endpoint of the IPG can detect the fault; the port D1 of the device D sends the CCM including the RDI flag to the port A1 of the device A, and the variable presentRDI of the MEP at the port D1 is set, that is, the variable presentRDI is equal to 1.

Step 903: setting a second mismatch fault indication variable (presentmmloc), namely, setting it as true or 1; at the same time, starting a timer expiring in a second time period.

For the device D, both the PTS variable and the variable presentRDI of the MEP at its port D1 are set, so the second mismatch fault indication variable (presentmmloc) of the MEP at the port D1 is set.

Step 904: when the timer is in time out, determining whether the second mismatch fault indication variable (presentmmloc) remains set after the second time period expires, if so, entering step 905; otherwise, it is considered that operation is normal, and ending the flow.

Step 905: it is considered that a mismatch fault occurs, alarm information is generated to report the fault.

After the second mismatch fault indication variable (presentmmloc) is set for a while, it is considered that a mismatch fault occurs on the device D, and alarming to inform the fault.

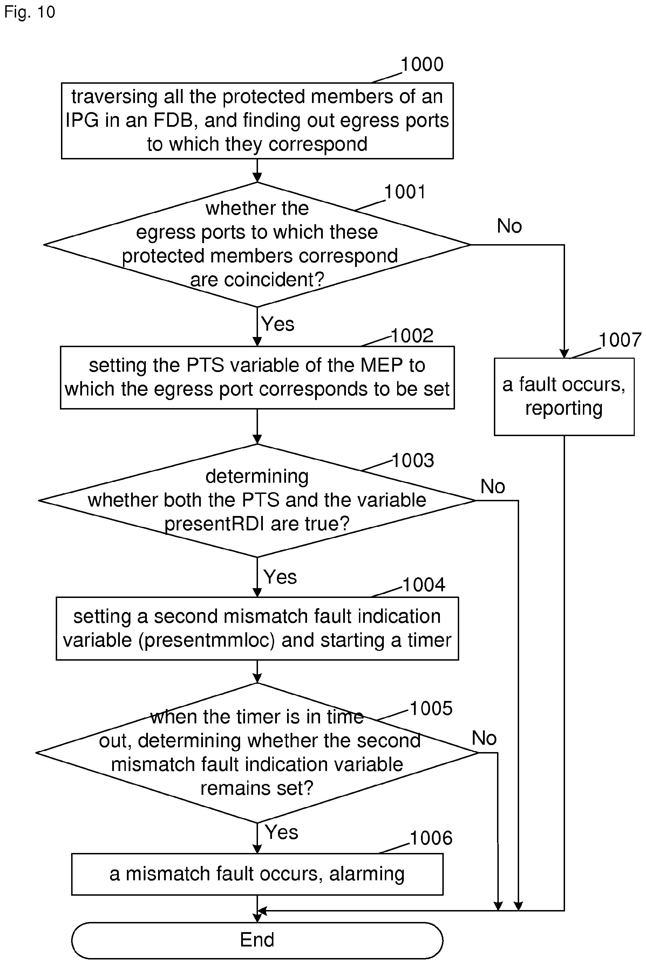

Fig. 10 shows a flowchart of a fourth embodiment of detecting a mismatch fault according to the disclosure; with reference to Fig. 8, in the fourth embodiment, supposing that determination of a PTS flag is performed according to all the protected members of an IPG, that is, it is needed to determine all the protected members; if all the protected members work in a segment, the PTS flag of the MEP in the segment is set, and supposing that an initial value of the PTS flag is 0. As shown in Fig. 10, the embodiment includes the following steps.

Step 1000: searching a certain protected member list of an IPG, traversing all the protected members in the list, searching items to which these protected members correspond in an FDB, and finding out egress ports to which they correspond according to the items.

For the device A, its FDB is shown in Fig. 8; there are two protected members <MAC1, VID1> and <MAC3, VID2> in a certain protected member list of the IPG; it is obtained that both the egress ports of the two protected members are the port A2 by searching corresponding items in the FDB on the device A.

Step 1001: determining whether the egress ports to which these protected members correspond are coincident; if so, entering step 1002; otherwise, entering step 1007.

Step 1002: setting the PTS variable of the MEP to which the egress port corresponds to be set.

Because both the egress ports of two protected members of the IPG on the device A are the port A2, which means that they are coincident, setting the PTS variable of the MEP at the port A2 as 1, which means that the traffic is transmitted through the port A2 currently; similarly, the PTS variable of the MEP at the port D1 on the device D in the fourth embodiment is equal to 1.

Step 1003: comparing the value of the PTS variable with the value of a variable presentRDI of the MEP. If both of them are in a set state, or both of them are true, entering step 1004; otherwise, operation is normal, and ending the flow;
if the MEP detects that there is fault, it sends the CCM including the RDI flag, and sets the variable presentRDI of the MEP.

In the third embodiment, because a fault occurs in the B-C segment, the device D as endpoint of the IPG can detect the fault; the port D1 of the device D sends the CCM including the RDI flag to the port A1 of the device A, and the variable presentRDI of the MEP at the port D1 is set, that is, the variable presentRDI is equal to 1.

Step 1004: setting a second mismatch fault indication variable (presentmmloc), namely, setting it as true or 1; at the same time, starting a timer expiring in a second time period.

For the device D, both the PTS variable and the variable presentRDI of the MEP at its port D1 are set, so its second mismatch fault indication variable (presentmmloc) is set.

Step 1005: when the timer is in time out, determining whether the second mismatch fault indication variable (presentmmloc) remains set after the second time period expires, if so, entering step 1006; otherwise, it is considered that operation is normal, and ending the flow.

Step 1006: it is considered that a mismatch fault occurs, alarm information is generated to report the fault.

After the second mismatch fault indication variable (presentmmloc) is set for a while, it is considered that a mismatch fault occurs on the device D, and alarming to inform the fault.

Step 1007: reporting related information, and exiting the flow of determining mismatch.

## Claims

1. A method for detecting a mismatch fault in Provider Backbone Bridging-Traffic Engineering, PBB-TE, infrastructure segment protection, comprising:
configuring a protection segment on a working segment of a PBB-TE tunnel to protect the working segment, wherein the working segment and the protection segment compose an Infrastructure Protection Group, IPG;
configuring a Traffic Engineering Service Instance, TESI, which is a channel for forwarding a Connectivity Check Message, CCM, on the working segment, and initiating a point-to-point Maintenance Association, MA, on the TESI, wherein two Maintenance Endpoints, MEPs, of the MA are two endpoints SEP of the working segment;
when endpoints of the IPG, Segment Edge Bridges, SEBs, finding out (400) egress ports values of the TESI protected by the IPG in Forwarding Databases, FDBs of the SEBs, setting a Present Traffic in Segment, PTS, variable of the MEPs whose egress ports correspond to the egress ports values of the TESI present in the FDBs as true; wherein the FDB comprises destination address and a Virtual Local Area Network Identification VID of the TESI protected by the IPG and a corresponding egress port; and
setting a value of a PTS field included in the CCM, according to the value of the PTS variable of the first MEP; and sending, by the first MEP, the CCM including the PTS field to the second MEP;
receiving (401), by the second MEP, the CCM from the first MEP; when the value of the PTS field included in the CCM does not coincide with that of the PTS variable of itself; setting, by the second MEP, a first mismatch fault indication variable mmCCMreceived as true; and
when the first mismatch fault indication variable mmCCMreceived remains true after a first preset time period expires, detecting that a mismatch fault occurs.

2. The method according to claim 1, wherein the value of the PTS field of the CCM is equal to the value of the PTS variable of the first MEP.

3. The method according to claim 1, further comprising: when the second MEP detects that a fault occurs in the working segment where the second MEP itself is,
sending, by the second MEP, a CCM including a Remote Defect Indication, RDI, flag, and setting a value of an RDI variable presentRDI of the second MEP as true;
when both the value of the variable presentRDI and the value of the PTS variable are true, setting, by the second MEP, a second mismatch fault indication variable presentmmloc as true; and
when the second mismatch fault indication variable presentmmloc remains true after a second preset time period expires, detecting that a mismatch fault occurs; otherwise, detecting that operation is normal and no mismatch fault occurs.

4. A method for detecting a mismatch fault in Provider Backbone Bridging-Traffic Engineering, PBB-TE, infrastructure segment protection, comprising:
configuring a protection segment on a working segment of a PBB-TE tunnel to protect the working segment, wherein the working segment and the protection segment compose an Infrastructure Protection Group, IPG;
configuring a Traffic Engineering Service Instance, TESI, which is a channel for forwarding a Connectivity Check Message, CCM, on the working segment, and initiating a point-to-point Maintenance Association, MA, on the TESI, wherein two Maintenance Endpoints, MEPs, of the MA are two endpoints SEP of the working segment;
when endpoints of the IPG, Segment Edge Bridges, SEBs, finding out (400) egress ports values of the TESI protected by the IPG in Forwarding Databases, FDBs of the SEBs; setting a Present Traffic in Segment, PTS, variable of the MEPs whose egress ports correspond to the egress ports values of the TESI present in the FDBs as true; wherein the FDB comprises destination address and a Virtual Local Area Network Identification VID of the TESI protected by the IPG and a corresponding egress port;
when the first MEP detecting that a fault occurs in the working segment where the first MEP itself is, sending, by the first MEP, a CCM including a Remote Defect Indication, RDI, flag which is true, to the second MEP; and setting, by the first MEP, a value of the RDI variable presentRDI of the first MEP as true;
when both the value of the variable presentRDI and the value of the PTS variable are true, setting, by the first MEP, a second mismatch fault indication variable presentmmloc as true; and
when the second mismatch fault indication variable presentmmloc remains true after a second preset time period expires, detecting that a mismatch fault occurs.

5. A system for detecting a mismatch fault in Provider Backbone Bridging-Traffic Engineering, PBB-TE, infrastructure segment protection, comprising at least two Segment Edge Bridge devices, SEBs;
wherein the two SEBs are two endpoints of an Infrastructure Protection Group, IPG, composed by a working segment of a PBB-TE tunnel and a protection segment for protecting the working segment; and egress ports of the two SEBs are configured to be associated to a first Maintenance Endpoint, MEP, and a second MEP;
wherein both the first MEP and the second MEP are located in a point-to-point Maintenance Association, MA, on a Traffic Engineering Service Instance, TESI, which is a channel for forwarding a Connectivity Check Message, CCM, on the working segment;
the two SEBs are configured to find out whether egress ports values of the TESI, protected by the IPG are in Forwarding Databases, FDBs of the SEBs, and to set a Present Traffic in Segment, PTS, variable of the MEPs whose egress ports correspond to the egress ports values of the TESI present in the FDBs as true when the egress ports values of the TESI protected by the IPG are in the FDBs; wherein the FDB comprises destination address and a Virtual Local Area Network Identification VID of the TESI protected by the IPG and a corresponding egress port;
wherein the first MEP is configured to set a PTS field in the CCM according to the value of the PTS variable of itself; and to send the CCM including the PTS field to the second MEP;
the second MEP is configured to receive the CCM from the first MEP, and to determine whether the value of the PTS field included in the received CCM is match to that of the PTS variable of itself, and to set a first mismatch fault indication variable mmCCMreceived as true, when the value of the PTS field included in the received CCM does not coincide with that of the PTS variable of itself; and
when the first mismatch fault indication variable mmCCMreceived remains true after a first preset time period expires, the second MEP is further configured to detect that a mismatch fault occurs.

6. The system for detecting a mismatch fault in Provider Backbone Bridging-Traffic Engineering, PBB-TE, infrastructure segment protection according to claim 5, wherein the second MEP is further configured to, when detecting that a fault occurs in the working segment, send a CCM including a Remote Defect Indication, RDI, flag, and to set a value of a variable presentRDI of itself as true.

7. The system for detecting a mismatch fault in Provider Backbone Bridging-Traffic Engineering, PBB-TE, infrastructure segment protection according to claim 6, wherein the second MEP is further configured to, when both the value of the variable presentRDI and the value of the PTS variable are true, set a second mismatch fault indication variable presentmmloc as true; and
when the second mismatch fault indication variable presentmmloc remains true after a second preset time period expires, the second MEP is further configured to detect that a mismatch fault occurs; otherwise, the second MEP is configured to detect that operation is normal and no mismatch fault occurs.

8. A system for detecting a mismatch fault in Provider Backbone Bridging-Traffic Engineering, PBB-TE, infrastructure segment protection, comprising at least two Segment Edge Bridge devices, SEBs;
wherein the two SEBs are two endpoints of an Infrastructure Protection Group, IPG, composed by a working segment of a PBB-TE tunnel and a protection segment for protecting the working segment; and egress ports of the two SEBs are configured to be associated to a first Maintenance Endpoint, MEP, and a second MEP;
wherein both the first MEP and the second MEP are located in a point-to-point Maintenance Association, MA, on a Traffic Engineering Service Instance, TESI, which is a channel configured for forwarding a Connectivity Check Message, CCM, on the working segment;
the two SEBs are configured to find out whether egress ports values of the TESI protected by the IPG are in Forwarding Databases, FDBs of the SEBs, and to set a Present Traffic in Segment ,PTS, variable of the MEPs whose egress ports correspond to the egress ports values of the TESI present in the FDBs as true when the egress ports values of the TESI protected by the IPG are in the FDB; wherein the FDB comprises destination address and a Virtual Local Area Network Identification VID of the TESI protected by the IPG and a corresponding egress port;
wherein the first MEP is configured to set a PTS field in the CCM according to the value of the PTS variable of itself; and to send the CCM including the PTS field to the second MEP;
when detecting that a fault occurs in the working segment, the first MEP further is configured to send a CCM including a Remote Defect Indication, RDI, flag, which is true, to the second MEP, and to set the value of a variable presentRDI of itself as true;
when both the value of its variable presentRDI and the value of the PTS variable of itself are true, the first MEP further is configured to set a second mismatch fault indication variable presentmmloc as true; and
when the second mismatch fault indication variable presentmmloc remains true after a second preset time period expires, the first MEP is configured to detect that a mismatch fault occurs; otherwise, the first MEP is configured to detect that operation is normal and no mismatch fault occurs.

## Patentansprüche

1. Verfahren zur Erkennung einer Fehlzuordnung im Provider Backbone Bridging-Traffic Engineering, PBB-TE, Infrastrukturbereichsschutz, umfassend:
Konfigurieren eines Schutzbereichs auf einem Arbeitsbereich eines PBB-TE-Tunnels, um den Arbeitsbereich zu schützen, wobei der Arbeitsbereich und der Schutzbereich eine Infrastruktur-Schutz-Gruppe, IPG, bilden;
Konfigurieren einer Traffic Engineering Service Instance, TESI, welche ein Kanal zum Weiterleiten einer Verbindungsprüfnachricht, CCM, auf dem Arbeitsbereich ist, und Initiieren einer Punkt-zu-Punkt Wartungszuordnung, MA, auf dem TESI, wobei zwei Wartungsendpunkte, MEPs, der MA zwei Endpunkte SEP des Arbeitsbereichs sind;
wenn Endpunkte der IPG, der Segment Edge Bridge, SEBs, Egress-Port-Werte der TESI ermitteln (400), welche durch die IPG in Weiterleitungsdatenbanken, FDBs der SEBs, geschützt sind, Setzen einer Present-Traffic im Bereich-, PTS, -Variable der MEPs, deren Egress-Ports den Egress-Port-Werten der TESI entsprechen, die in den FDBs als wahr vorhanden sind; wobei die FDB eine Zieladresse und eine Virtual Local Area Network Identification VID der TESI umfasst, welche durch die IPG und einen zugehörigen Egress-Port geschützt sind; und
Setzen eines Wertes eines PTS-Feldes, welches in der CCM enthalten ist, gemäß dem Wert der PTS-Variable des ersten MEP; und Senden der CCM enthaltend das PTS-Feld an den zweiten MEP durch den ersten MEP;
Empfangen (401) der CCM von dem ersten MEP durch den zweiten MEP; wenn der Wert des PTS-Feldes, welches in der CCM enthalten ist, nicht mit dem der PTS-Variable von sich selbst übereinstimmt;Setzen einer ersten Fehlzuordnungsanzeigenvariable mmCCMempfangen als wahr durch den zweiten MEP; und
wenn die erste Fehlzuordnungsanzeigevariable mmCCMempfangen wahr bleibt, nachdem ein erster voreingestellter Zeitraum abläuft, Erkennen, dass eine Fehlzuordnung auftritt.

2. Verfahren nach Anspruch 1, wobei der Wert des PTS-Feldes der CCM gleich ist zu dem Wert der PTS-Variable des ersten MEP.

3. Verfahren nach Anspruch 1, weiter umfassend: wenn der zweite MEP erkennt, dass ein Fehler in dem Arbeitsbereich auftritt, wo der zweite MEP selbst ist, Senden einer CCM beinhaltend eine Remote Defect Indication-Flag, RDI-Flag, durch den zweiten MEP, und Setzen eines Wertes einer RDI-Variablen presentRDI des zweiten MEP als wahr;
wenn beide, der Wert der variablen presentRDI und der Wert der PTS-Variablen, wahr sind, Setzen einer zweiten Fehlzuordnungsanzeigevariablen presentmmloc als wahr durch den zweiten MEP; und
wenn die zweite Fehlzuordnungsanzeigevariable presentmmloc nachdem ein zweiter voreingestellter Zeitraum abläuft wahr bleibt, Erkennen, dass eine Fehlzuordnung auftritt; ansonsten, Erkennen, dass der Betrieb normal ist und keine Fehlzuordnung auftritt.

4. Verfahren zur Erkennung einer Fehlzuordnung im Provider Backbone Bridging-Traffic Engineering, PBB-TE, Infrastrukturbereichsschutz, umfassend:
Konfigurieren eines Schutzbereichs auf einem Arbeitsbereich eines PBB-TE-Tunnels, um den Arbeitsbereich zu schützen, wobei der Arbeitsbereich und der Schutzbereich eine Infrastruktur-Schutz-Gruppe, IPG, bilden;
Konfigurieren einer Traffic Engineering Service Instance, TESI, welche ein Kanal zum Weiterleiten einer Verbindungsprüfnachricht, CCM, auf dem Arbeitsbereich ist, und Initiieren einer Punkt-zu-Punkt Wartungszuordnung, MA, auf dem TESI, wobei zwei Wartungsendpunkte, MEPs, der MA zwei Endpunkte SEP des Arbeitsbereichs sind;
wenn Endpunkte der IPG, der Segment Edge Bridges, SEBs, Egress-Port-Werte der TESI ermitteln (400), welche durch die IPG in Weiterleitungsdatenbanken, FDBs der SEBs, geschützt ist, Setzen einer Present-Traffic im Bereichvariable, PTS-Variable, der MEPs, deren Egress-Ports den Egress-Port-Werten der TESI entsprechen, die in den FDBs als wahr vorhanden sind; wobei die FDB Zieladressen und eine Virtual Local Area Network Identification VID der TESI umfasst, welche durch die IPG und einen zugehörigen Egress-Port geschützt sind; und
wenn der erste MEP erkennt, dass ein Fehler in dem Arbeitsbereich auftritt, wo der erste MEP selbst ist, Senden einer CCM beinhaltend eine Remote Defect Indication-Flag, RDI-Flag, durch den ersten MEP an den zweiten MEP; und
Setzen eines Wertes der ersten RDI-Variable presentRDI des ersten MEP als wahr;
wenn beide, der Wert der variablen presentRDI und der Wert der PTS-Variablen, wahr sind, Setzen einer zweiten Fehlzuordnungsanzeigevariablen presentmmloc als wahr durch den ersten MEP; und
wenn die zweite Fehlzuordnungsanzeigevariable presentmmloc nachdem ein zweiter voreingestellter Zeitraum abläuft wahr bleibt, Erkennen, dass eine Fehlzuordnung auftritt.

5. System zur Erkennung einer Fehlzuordnung im Provider Backbone Bridging-Traffic Engineering, PBB-TE, Infrastrukturbereichsschutz umfassend zumindest zwei Segment Edge Bridge-Vorrichtungen, SEBs;
wobei die zwei SEBs zwei Endpunkte einer Infrastrukturschutzgruppe, IPG, sind, welche durch einen Arbeitsbereich eines PBB-TE-Tunnels und einem Schutzbereich zum Schützen des Arbeitsbereichs zusammengesetzt sind; und Egress-Ports der zwei SEBs konfiguriert sind, um einem ersten Wartungsendpunkt, MEP, und einem zweiten MEP zugeordnet zu sein;
wobei beide, der erste MEP und der zweite MEP, in einer Punkt-zu-Punkt Wartungszuordnung, MA, auf einer Traffic Engineering Service Instance, TESI, angeordnet sind, welche ein Kanal zum Weiterleiten einer Verbindungsprüfnachricht, CCM, auf dem Arbeitsbereich ist;
wobei die zwei SEBs konfiguriert sind, um zu ermitteln, ob Egress-Port-Werte der TESI, durch die IPG in Weiterleitungsdatenbanken, FDBs der SEBS, geschützt sind, und, um eine Present-Traffic im Bereichvariable, PTS- Variable, der MEPs zu setzten, deren Egress-Ports mit den Egress-Port-Werten der TESI übereinstimmen, welche in den FDBs als wahr vorhanden sind, wenn die Egress-Port-Werte der TESI, welche durch die IPG geschützt sind, in den FDBs sind;
wobei die FDB eine Zieladresse und eine Virtual Local Area Network Identification VID der TESI umfasst, welche durch die IPG und einen zugehörigen Egress-Port geschützt sind;
wobei der erste MEP konfiguriert ist, um ein PTS-Feld in der CCM gemäß dem Wert der PTS-Variable von sich selbst zu setzen; und um die CCM, beinhaltend das PTS-Feld, an den zweiten MEP zu senden;
der zweite MEP ist konfiguriert, um die CCM von dem ersten MEP zu empfangen und um zu erkennen, ob der Wert des PTS-Feldes, welches in der empfangenen CCM enthalten ist, eine Übereinstimmung zu dem der PTS-Variablen von sich selbst ist, und um eine erste Fehlzuordnungsanzeigevariable mmCCMreceived als wahr zu setzen, wenn der Wert des PTS-Feldes, welches in der empfangenen CCM enthalten ist, nicht mit dem der PTS-Variablen von sich selbst übereinstimmt; und
wenn die erste Fehlzuordnungsanzeigevariable mmCCMreceived wahr bleibt, nachdem ein erster voreingestellter Zeitraum abläuft, ist der zweite MEP weiter konfiguriert, um zu erkennen, dass eine Fehlzuordnung auftritt.

6. System zur Erkennung einer Fehlzuordnung im Provider Backbone Bridging-Traffic Engineering, PBB-TE, Infrastrukturbereichsschutz nach Anspruch 5, wobei der zweite MEP weiter konfiguriert ist, um, wenn erkannt wird, dass ein Fehler in dem Arbeitsbereich auftritt, eine CCM beinhaltend eine Remote Defect Indication-Flag, RDI-Flag, zu senden, und um eine Wert einer Variablen presentRDI von sich selbst als wahr zu setzen.

7. System zur Erkennung einer Fehlzuordnung im Provider Backbone Bridging-Traffic Engineering, PBB-TE, Infrastrukturbereichsschutz nach Anspruch 6, wobei der zweite MEP weiter konfiguriert ist um, wenn beide, der Wert der Variablen presentRDI und der Wert der PTS-Variablen, wahr sind, eine zweite Fehlzuordnungsvariable presentmmloc als wahr zu setzen; und
wenn die zweite Fehlzuordnungsanzeigevariable presentmmloc wahr bleibt, nachdem ein zweiter voreingestellter Zeitraum abgelaufen ist, ist der zweite MEP weiter konfiguriert, um zu erkennen, dass eine Fehlzuordnung auftritt; ansonsten ist der zweite MEP konfiguriert, um zu erkennen, dass der Betrieb normal ist und keine Fehlzuordnung auftritt.

8. System zur Erkennung einer Fehlzuordnung im Provider Backbone Bridging-Traffic Engineering, PBB-TE, Infrastrukturbereichsschutz umfassend zumindest zwei Segment Edge Bridge-Vorrichtungen, SEBs;
wobei die zwei SEBs zwei Endpunkte einer Infrastrukturschutzgruppe, IPG, sind, welche durch einen Arbeitsbereich eines PBB-TE-Tunnels und einem Schutzbereich zum Schützen des Arbeitsbereichs zusammengesetzt sind; und Egress-Ports der zwei SEBs konfiguriert sind, um einem ersten Wartungsendpunkt, MEP, und einem zweiten MEP zugeordnet zu sein;
wobei beide, der erste MEP und der zweite MEP, in einer Punkt-zu-Punkt Wartungszuordnung, MA, auf einer Traffic Engineering Service Instance, TESI, angeordnet sind, welche ein Kanal zum Weiterleiten einer Verbindungsprüfnachricht, CCM, auf dem Arbeitsbereich ist;
wobei die zwei SEBs konfiguriert sind, um zu ermitteln, ob Egress-Port-Werte der TESI, durch die IPG in Weiterleitungsdatenbanken, FDBs der SEBS, geschützt sind, und, um eine Present-Traffic im Bereichvariable, PTS- Variable, der MEPs zu setzten, deren Egress-Ports mit den Egress-Port-Werten der TESI übereinstimmen, welche in den FDBs als wahr vorhanden sind, wenn die Egress-Port-Werte der TESI, welche durch die IPG geschützt sind, in den FDBs sind;
wobei die FDB eine Zieladresse und eine Virtual Local Area Network Identification VID der TESI umfasst, welche durch die IPG und einen zugehörigen Egress-Port geschützt sind;
wobei der erste MEP konfiguriert ist, um ein PTS-Feld in der CCM gemäß dem Wert der PTS-Variable von sich selbst zu setzen; und um die CCM, beinhaltend das PTS-Feld, an den zweiten MEP zu senden;
wenn erkannt wird, dass ein Fehler in dem Arbeitsbereich auftritt, ist der erste MEP weiter konfiguriert, um eine CCM beinhaltend eine Remote Defect Indication-Flag, RDI-Flag, welche wahr ist, an den zweiten MEP zu senden, und um den Wert einer Variablen presentRDI von sich selbst als wahr zu setzen; wenn beide, der Wert der Variablen presentRDI und der Wert der PTS-Variablen von sich selbst, wahr sind, ist der erste MEP weiter konfiguriert, um eine zweite Fehlzuordnungsanzeigevariable presentmmloc als wahr zu setzen; und
wenn die zweite Fehlzuordnungsanzeigevariable presentmmloc wahr bleibt, nachdem ein zweiter voreingestellter Zeitraum abläuft, ist der erste MEP konfiguriert, um zu erkennen, dass eine Fehlzuordnung auftritt; ansonsten ist der erste MEP konfiguriert, um zu erkennen, dass der Betrieb normal ist und keine Fehlzuordnung auftritt.

## Revendications

1. Procédé pour détecter un défaut de désadaptation dans une protection de segment d'infrastructure de Pontage de Dorsale de Fournisseur-Ingénierie du Trafic, PBB-TE, comprenant :
la configuration d'un segment de protection sur un segment de travail d'un tunnel PBB-TE pour protéger le segment de travail, où le segment de travail et le segment de protection composent un Groupe de Protection d'Infrastructure, IPG ;
la configuration d'une Instance de Service d'Ingénierie du Trafic, TESI, qui est une voie pour transférer un Message de Vérification de Connectivité, CCM, sur le segment de travail, et l'initiation d'une Association de Maintenance, MA, point à point, sur la TESI, où deux Points d'Extrémité de Maintenance, MEP, de la MA sont deux points d'extrémité SEP du segment de travail ;
lorsque des points d'extrémité de l'IPG, Ponts d'Extrémité de Segment, SEB, la détermination (400) des valeurs de ports de sortie de la TESI protégée par l'IPG dans des Bases de Données de Transfert, FDB des SEB, l'établissement d'une variable de Trafic Présent dans le Segment, PTS, des MEP dont les ports de sortie correspondent aux valeurs de ports de sortie de la TESI présente dans les FDB comme vraie ; où la FDB comprend une adresse de destination et une Identification de Réseau local Virtuel VID de la TESI protégée par l'IPG et un port de sortie correspondant ; et
l'établissement d'une valeur d'un champ PTS inclus dans le CCM, en fonction de la valeur de la variable PTS du premier MEP ; et l'envoi, par le premier MEP, du CCM incluant le champ PTS au second MEP ;
la réception (401), par le second MEP, du CCM en provenance du premier MEP ; lorsque la valeur du champ PTS inclus dans le CCM ne coïncide pas avec celle de la variable PTS de lui-même ; l'établissement, par le second MEP, d'une première variable d'indication de défaut de désadaptation mmCCMreceived comme vraie ; et
lorsque la première variable d'indication de défaut de désadaptation mmCCMreceived reste vraie après qu'une première période de temps préétablie expire, la détection qu'un défaut de désadaptation se produit.

2. Procédé selon la revendication 1, dans lequel la valeur du champ PTS du CCM est égale à la valeur de la variable PTS du premier MEP.

3. Procédé selon la revendication 1, comprenant en outre : lorsque le second MEP détecte qu'un défaut se produit dans le segment de travail où se trouve le second MEP lui-même,
l'envoi, par le second MEP, d'un CCM incluant un drapeau d'Indication de Défaut à Distance, RDI, et l'établissement d'une valeur d'une variable RDI presentRDI du second MEP comme vraie ;
lorsqu'à la fois la valeur de la variable presentRDI et la valeur de la variable PTS sont vraies, l'établissement, par le second MEP, d'une seconde variable d'indication de défaut de désadaptation presentmmloc comme vraie ; et
lorsque la seconde variable d'indication de défaut de désadaptation presentmmloc reste vraie après qu'une seconde période de temps préétablie expire, la détection qu'un défaut de désadaptation se produit ; sinon, la détection que le fonctionnement est normal et qu'aucun défaut de désadaptation ne se produit.

4. Procédé pour détecter un défaut de désadaptation dans une protection de segment d'infrastructure de Pontage de Dorsale de Fournisseur-Ingénierie du Trafic, PBB-TE, comprenant :
la configuration d'un segment de protection sur un segment de travail d'un tunnel PBB-TE pour protéger le segment de travail, où le segment de travail et le segment de protection composent un Groupe de Protection d'Infrastructure, IPG ;
la configuration d'une Instance de service d'ingénierie du trafic, TESI, qui est une voie pour transférer un Message de Vérification de Connectivité, CCM, sur le segment de travail, et l'initiation d'une Association de Maintenance, MA, point à point, sur la TESI, où deux Points d'extrémité de maintenance, MEP, de la MA sont deux points d'extrémité SEP du segment de travail ;
lorsque des points d'extrémité de l'IPG, Ponts d'Extrémité de Segment, SEB, la détermination (400) des valeurs de ports de sortie de la TESI protégée par l'IPG dans des Bases de Données de Transfert, FDB des SEB, l'établissement d'une variable de Trafic Présent dans le Segment, PTS, des MEP dont les ports de sortie correspondent aux valeurs de ports de sortie de la TESI présente dans les FDB comme vraie ; où la FDB comprend une adresse de destination et une Identification de Réseau local Virtuel VID de la TESI protégée par l'IPG et un port de sortie correspondant ;
lorsque le premier MEP détecte qu'un défaut se produit dans le segment de travail où se trouve le premier MEP lui-même, l'envoi, par le premier MEP, d'un CCM incluant un drapeau d'Indication de défaut à distance, RDI, qui est vrai, au second MEP ; et l'établissement, par le premier MEP, d'une valeur de la variable RDI presentRDI du premier MEP comme vraie ;
lorsqu'à la fois la valeur de la variable presentRDI et la valeur de la variable PTS sont vraies, l'établissement, par le premier MEP, d'une seconde variable d'indication de défaut de désadaptation presentmmloc comme vraie ; et
lorsque la seconde variable d'indication de défaut de désadaptation presentmmloc reste vraie après qu'une seconde période de temps préétablie expire, la détection qu'un défaut de désadaptation se produit.

5. Système pour détecter un défaut de désadaptation dans une protection de segment d'infrastructure de Pontage de Dorsale de Fournisseur-Ingénierie du Trafic, PBB-TE, comprenant au moins deux dispositifs de Pont d'Extrémité de Segment, SEB;
dans lequel les deux SEB sont deux points d'extrémité d'un Groupe de Protection d'Infrastructure, IPG, composé d'un segment de travail d'un tunnel PBB-TE et d'un segment de protection pour protéger le segment de travail ; et des ports de sortie des deux SEB sont configurés pour être associés à un premier Point d'Extrémité de Maintenance, MEP, et un second MEP ;
dans lequel à la fois le premier MEP et le second MEP sont localisés dans une Association de Maintenance, MA, point à point sur une Instance de Service d'Ingénierie du Trafic, TESI, qui est une voie pour transférer un Message de Vérification de Connectivité, CCM, sur le segment de travail ;
les deux SEB sont configurés pour découvrir si des valeurs de ports de sortie de la TESI, protégée par l'IPG sont dans des Bases de Données de Transfert, FDB des SEB, et pour établir une variable de Trafic Présent dans le Segment, PTS, des MEP dont les ports de sortie correspondent aux valeurs de ports de sortie de la TESI présente dans les FDB comme vraie lorsque les valeurs de ports de sortie de la TESI protégée par l'IPG sont dans les FDB ; où la FDB comprend une adresse de destination et une Identification de Réseau local Virtuel VID de la TESI protégée par l'IPG et un port de sortie correspondant ;
dans lequel le premier MEP est configuré pour établir un champ PTS dans le CCM en fonction de la valeur de la variable PTS de lui-même ; et pour envoyer le CCM incluant le champ PTS au second MEP ;
le second MEP est configuré pour recevoir le CCM en provenance du premier MEP, et pour déterminer si la valeur du champ PTS inclus dans le CCM reçu concorde avec celle de la variable PTS de lui-même, et pour établir une première variable d'indication de défaut de désadaptation mmCCMreceived comme vraie, lorsque la valeur du champ PTS inclus dans le CCM reçu ne coïncide pas avec celle de la variable PTS de lui-même ; et
lorsque la première variable d'indication de défaut de désadaptation mmCCMreceived reste vraie après qu'une première période de temps préétablie expire, le second MEP est en outre configuré pour détecter qu'un défaut de désadaptation se produit.

6. Système pour détecter un défaut de désadaptation dans une protection de segment d'infrastructure de Pontage de Dorsale de Fournisseur-Ingénierie du Trafic, PBB-TE, selon la revendication 5, dans lequel le second MEP est en outre configuré pour, lors de la détection qu'un défaut se produit dans le segment de travail, envoyer un CCM incluant un drapeau d'Indication de Défaut à Distance, RDI, et pour établir une valeur d'une variable presentRDI de lui-même comme vraie.

7. Système pour détecter un défaut de désadaptation dans une protection de segment d'infrastructure de Pontage de Dorsale de Fournisseur-Ingénierie du Trafic, PBB-TE, selon la revendication 6, dans lequel le second MEP est en outre configuré pour, lorsqu'à la fois la valeur de la variable presentRDI et la valeur de la variable PTS sont vraies, établir une seconde variable d'indication de défaut de désadaptation presentmmloc comme vraie ; et
lorsque la seconde variable d'indication de défaut de désadaptation presentmmloc reste vraie après qu'une seconde période de temps préétablie expire, le second MEP est en outre configuré pour détecter qu'un défaut de désadaptation se produit ; sinon, le second MEP est configuré pour détecter que le fonctionnement est normal et qu'aucun défaut de désadaptation ne se produit.

8. Système pour détecter un défaut de désadaptation dans une protection de segment d'infrastructure de Pontage de Dorsale de Fournisseur-Ingénierie du Trafic, PBB-TE, comprenant au moins deux dispositifs de Pont d'Extrémité de Segment, SEB;
dans lequel les deux SEB sont deux points d'extrémité d'un Groupe de Protection d'Infrastructure, IPG, composé d'un segment de travail d'un tunnel PBB-TE et d'un segment de protection pour protéger le segment de travail ; et des ports de sortie des deux SEB sont configurés pour être associés à un premier Point d'Extrémité de Maintenance, MEP, et un second MEP ;
dans lequel à la fois le premier MEP et le second MEP sont localisés dans une Association de Maintenance, MA, point à point sur une Instance de Service d'Ingénierie du Trafic, TESI, qui est une voie configurée pour transférer un Message de Vérification de Connectivité, CCM, sur le segment de travail ;
les deux SEB sont configurés pour découvrir si des valeurs de ports de sortie de la TESI protégée par l'IPG sont dans des Bases de Données de Transfert, FDB des SEB, et pour établir une variable de Trafic Présent dans le Segment, PTS, des MEP dont les ports de sortie correspondent aux valeurs de ports de sortie de la TESI présente dans les FDB comme vraie lorsque les valeurs de ports de sortie de la TESI protégée par l'IPG sont dans la FDB ; où la FDB comprend une adresse de destination et une Identification de Réseau local Virtuel VID de la TESI protégée par l'IPG et un port de sortie correspondant ;
dans lequel le premier MEP est configuré pour établir un champ PTS dans le CCM en fonction de la valeur de la variable PTS de lui-même ; et pour envoyer le CCM incluant le champ PTS au second MEP ;
lors de la détection qu'un défaut se produit dans le segment de travail, le premier MEP est en outre configuré pour envoyer un CCM incluant un drapeau d'Indication de Défaut à Distance, RDI, qui est vrai, au second MEP, et pour établir la valeur d'une variable presentRDI de lui-même comme vraie ;
lorsqu'à la fois la valeur de sa variable presentRDI et la valeur de la variable PTS de lui-même sont vraies, le premier MEP est en outre configuré pour établir une seconde variable d'indication de défaut de désadaptation presentmmloc comme vraie ; et
lorsque la seconde variable d'indication de défaut de désadaptation presentmmloc reste vraie après qu'une seconde période de temps préétablie expire, le premier MEP est configuré pour détecter qu'un défaut de désadaptation se produit ; sinon, le premier MEP est configuré pour détecter que le fonctionnement est normal et qu'aucun défaut de désadaptation ne se produit.
